# EUROPEAN PATENT SPECIFICATION

(11) **EP 1 770 869 B1**
(45) Date of publication and mention of the grant of the patent: **05.08.2009**
(21) Application number: 06119970.9
(22) Date of filing: 01.09.2006
(51) Int. Cl.: H04B 1/69

(54) **Ultra-wideband network system and method capable of switching to high-speed mode or low-speed mode**
Ultrabreitbandnetzwerksystem und Ultrabreitbandnetzwerkverfahren geeignet zur Umschaltung zu einem Hochgeschwindigkeitsmodus oder zu einem Modus mit niedriger Geschwindigkeit
Système et Procédé de réseau à bande ultra-large, capable de commuter à des modes de vitesse élevée ou faible

(30) Priority: 28.09.2005 KR 20050090698
(43) Date of publication of application: 04.04.2007
(73) Proprietor: Samsung Electronics Co., Ltd., Suwon-si, Gyeonggi-Do (KR)
(72) Inventor: Kim, Wan-jin, Seoul (KR); Koo, Jae-hyun, Bora-dong Giheung-gu Yongin Gyeonggi-do (KR)
(74) Representative: Grünecker, Kinkeldey, Stockmair & Schwanhäusser Anwaltssozietät

(56) References cited:
- US-A1- 2005 113 151
- US-A1- 2005 147 071
- HARAME D L ET AL: "Semiconductor technology choices for ultrawide-band (UWB) systems" 2005 IEEE INTERNATIONAL CONFERENCE ON ULTRA-WIDEBAND (IEEE CAT. NO.05EX1170C) IEEE PISCATAWAY, NJ, USA, 5 September 2005 (2005-09-05), pages 725-734, XP010872179 ISBN: 0-7803-9397-X
- JOHANN CHIANG: ""A War to End All Wars" Between UWB WPAN Systems" STUDENT PROJECT 2006, [Online] 1 January 2003 (2003-01-01), pages 1-8, XP002414907 Austin, Texas, USA Retrieved from the Internet: URL:http://www.ece.utexas.edu/~jandrews/ee 381v/student_report/Johann.pdf> [retrieved on 2007-01-15]

## Description

### BACKGROUND OF THE INVENTION

### 1. Field of the Invention

Apparatuses, systems, and methods consistent with the present invention relate to an ultra wideband network communications, and more particularly, to switching to a high-speed mode or a low-speed mode, in order for an ultra wideband communication terminal device such as a home network device to selectively perform high-speed communications or low-speed communications.

### 2. Description of the Related Art

In general, ultra wideband (UWB) is a wireless transmission technology whose a frequency bandwidth is 20 percent or 500 MHz more than a central frequency bandwidth. Accordingly, bandwidth gets broader in the frequency band and conversely, the transmission power density gets lower on the frequency axis.

Federal Communications Commission (FCC) sets approximately 3.1 GHz to approximately 10.6 GHz for a frequency band for UWB communication and sets - 41.3 dBm as a limit of power emission.

There are two UWB communication methods currently available which satisfy the limits placed on power emission. One is a multi-band orthogonal frequency division multiplexing (MB-OFDM) method in which the band of approximately 3.1 ∼ 10.6 GHz is divided by 528 MHz and each resulting band is frequency-hopped using an UWB signal of an OFDM type. The other one is a direct sequence code division multiple access (DS-CDMA) method in which the band of approximately 3.1 ∼ 10.6 GHz is divided in half and a 24-bit codeword is substituted for a bit sequence of each band using an UWB signal.

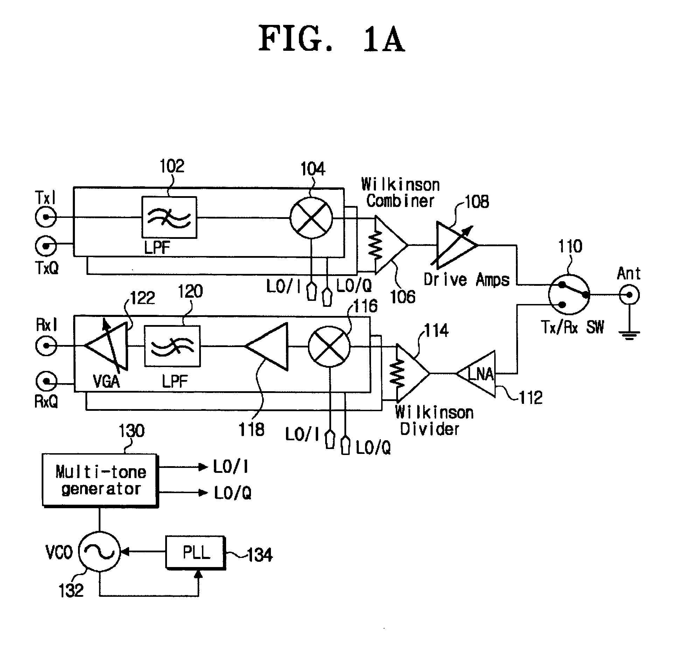

FIG. 1A is a schematic block diagram showing the structure of a wireless frequency transceiver of a conventional MB-OFDM type.

The wireless frequency transceiver of the conventional MB-OFDM type includes a low-pass filter (LPF) 102, a transmission mixer 104, a Wilkinson combiner 106, a drive amplifier (drive amps) 108, a switch 110, a low noise amplifier (LNA) 112, a Wilkinson demultiplier 114, a reception mixer 116, an amplifier 118, an LPF 120, a variable gain amplifier (VGA) 122, a multi-tone generator 130, a voltage control oscillator (VCO) 132 and a phase lock loop (PLL) 134.

When the above described wireless frequency transceiver of the conventional MB-OFDM type transmits data, an oscillation frequency of the VCO 132 generates a local oscillation signal of an I channel and a local oscillation signal of a Q channel through the multi-tone generator 130, the transmission mixer 104 mixes the local oscillation signals of the I channel and the Q channel and the transmission signal filtered through the LPF 102, the Wilkinson combiner 106 combines the mixed signal of the I channel and the mixed signal of the Q channel, the combined signal is amplified through the drive amps 108 and is transmitted through an antenna (Ant). This process is performed by switching to a transmission mode using the switch 110.

On the other hand, when the wireless frequency transceiver of the conventional MB-OFDM type receives data, the switch 110 switches to a reception mode to process the received data. The LNA 112 amplifies a signal received through the antenna, the Wilkinson demultiplier 114 divides the amplified signal into an I channel signal and a Q channel signal, and the reception mixer 116 mixes the received signal with a local oscillation signal of an I channel and a local oscillation signal of a Q channel. Subsequently, the mixed signal is amplified by the amplifier 118, filtered by the LPF 120 and amplified by the VGA 122 to input I channel data and Q channel data respectively.

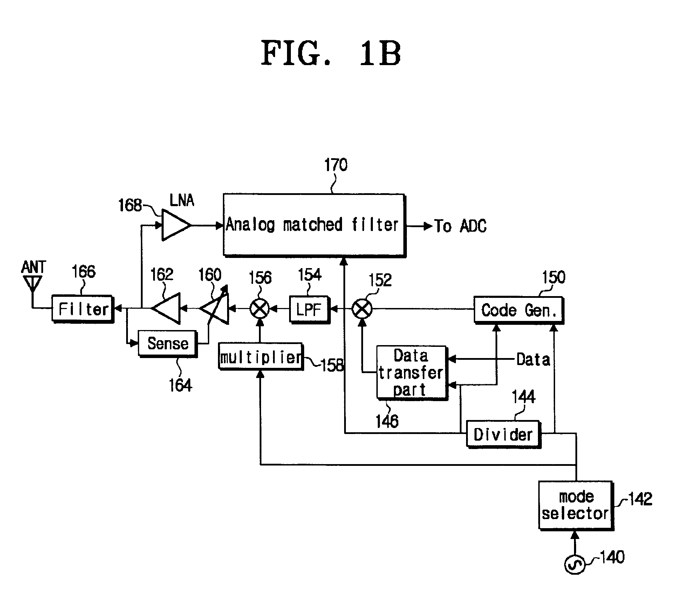

FIG. 1B is a schematic block diagram showing the structure of a wireless frequency transceiver of a conventional DS-CDMA type.

The wireless frequency transceiver of the conventional DS-CDMA type includes an oscillator 140, a band selector (/N) 142, a demultiplier (/L) 144, a data transfer part 146, a code generator 150, a mixer 152, a low pass filter (LPF) 154, a mixer 156, a multiplier 158, a drive amplifier 160, an amplifier 162, a sense 164, a filter 166, a LNA 168 and a receiver 170.

The above described wireless frequency transceiver of the conventional DS-CDMA type oscillates agile clock of 1.352 GHz through the oscillator 140. Subsequently, in the case of n=1, the band selector 142 selects frequency of 1.5 GHz bandwidth used in IEEE 802.15.TG3a, or in the case of n=3, the band selector 142 selects frequency of 500 MHz bandwidth used in IEEE 802.15.TG4a. Commonly, n is set to 1 upon a high-speed mode and to 3 upon a low-speed mode. The frequency of the band selected through the band selector 142 is transmitted through the multiplier 158 to the mixer 156 of a transmitter as a chip rate clock or transmitted through the demultiplier 144 to the receiver 170 as a symbol rate clock. Additionally, the chip rate clock and symbol rate clock are also transmitted to the code generator 150. In the case of data transmission, the code generator 150 generates a ternary code of '+1, 0, -1' based on the chip rate clock and symbol rate clock, and transmits the ternary code to the mixer 152, and the data transfer part 146 transmits data received from a CPU or a memory to the mixer 152 based on the symbol rate clock. The mixer 152 mixes the ternary code and the data and transmits the result to the LPF 154 and the LPF 154 filters the combined data and transmits the data to the mixer 156. The mixer 156 receives the chip rate clock from the band selector 142 in both a high-speed mode of n=1 and a low-speed mode of n=3, receives the combined data and mixes both together. Next, the mixed data are amplified through the drive amplifier 160 and the amplifier 162, are filtered through the filter 166 and are transmitted through an ANT. Herein, the mixed data are amplified through the amplifier 162, regulated through the sense 164 and transmitted to the filter 166.

When the wireless frequency transceiver of the conventional DS-CDMA type receives data, the received signal is amplified through the LNA 168 and transmitted to the receiver 170. The receiver 170 mixes, amplifies, integrates, samples and holds the received signal and the clock signal to transmit to an analog to digital (A/D) converter.

However, even though many companies adopt the MB OFDM type method for high-speed communication, this method is not appropriate for a low-power sensor network system mainly using a location recognition technology. In addition, because the MB-OFDM technology is not compatible with other sensor network systems, an extra transceiver is needed to subscribe to the sensor network systems.

On the other hand, in the case of the DS-CDMA type method, it is easy to share the transceiver in the high-speed mode and the low-speed mode as above described. However, the high-speed mode of the DS-CDMA is not adopted by many companies so that compatibility is low.

Additionally, when a transceiver of the MB-OFDM type and a transceiver of the DS-CDMA type are used at the same time, because the communication types are different, each transceiver interprets the other transceiver's frequencies as noise so that serious interference occurs.

Document "Semiconductor Technology Choices for Ultrawide-Band (UWB) Systems" (Harame D L et al) 2005 IEEE International Conference on Ultra-Wideband (IEEE Cat. No. 05EX1170C) IEEE Piscataway, NJ, USA, 5 September 2005, pages 725 - 734, discloses that the UWB system requirements for the DS UWB and MB OFDM scheme are different.

This document also discloses system architecture examples DS UWB and OFDM UWB. A low-noise amplifier, the frequency synthesizer, the mixer and the power amplifier requirements are significantly different for the two standards. For instance, depending on the system architecture, the required low-noise amplifier bandwidth can vary from < 2 GHz in a mode-1 MB-OFDM system to over 7 GHz in some of the DS-UWB designs.

### SUMMARY OF THE INVENTION

An aspect of the present invention is to address the above and other problems and/or disadvantages.. Accordingly, an aspect of the present invention is to provide an ultra wideband network system and a method capable of switching to a high-speed mode or a low-speed mode, in order for an ultra wideband communication terminal device such as home network devices to perform high-speed communications and low-speed communications.

In order to achieve the above-described aspect of the present invention, there is provided an ultra wideband (UWB) network transmitter, comprising a multi-band orthogonal frequency division multiplexing (MB-OFDM) modem which modulates a transmission signal using MB-OFDM; a direct sequence code division multiple access (DS-CDMA) modem which modulates a transmission signal using DS-CDMA; a mode switch which switches to the MB-OFDM modem or the DS-CDMA modem according to a mode control signal; a phase lock loop (PLL) which shifts a phase of a frequency according to a phase control signal and locks the frequency used for MB-OFDM type or the DS-CDMA type modulation; and a central processing unit (CPU) which transmits the mode control signal to the mode switch and transmits the phase control signal to the PLL.

The mode control signal may be a high-speed mode control signal or a low-speed mode control signal.

The CPU may transmit the mode control signal to the mode switch and the phase control signal to the PLL, according to a mode selection input.

The UWB network transmitter may further comprise a low-pass filter (LPF) which filters out a high frequency noise component of a signal output from the MS-OFDM modem or the DS-CDMA modem and passes a low frequency component of the signal; a mixer which mixes the signal output from the LPF and an oscillation signal to up-convert the signal; an amplifier which amplifies the up-converted signal; a band-pass filter (BPF) which passes a frequency band of an MB-OFDM type or a frequency band of an DS-CDMA type ; a voltage control oscillator (VCO) which generates a voltage-controlled oscillation signal according to a control voltage; and a multi-tone generator which receives the voltage-controlled oscillator signal and generates the oscillation signal as a local oscillation signal of an I channel and a Q channel.

When there is no data to be transmitted, the mode switch may be switched to the DS-CDMA modem so that the UWB network transmitter is in a low-speed operation mode.

The CPU may determine whether to keep the high-speed operation mode after transmitting data, and when it is determined that a low-speed operation mode is desired, the CPU may transmit a low-speed mode control signal to the mode switch.

The PLL may comprise a reference clock generator which generates a reference frequency; a divider which divides the reference frequency to generate a division frequency; a mixer which mixes the division frequency and a demultiply frequency to detect phase; a LPF which blocks a high frequency noise component of a signal output from the mixer and passes a low frequency component of the signal; and a low noise amplifier (LNA) which amplifies the signal output from the LPF and lowers a noise factor of the frequency signal and transmits the signal to the VCO; and a demultiplier which demultiplies the signal output from the VCO and generates a chip rate clock signal and a symbol rate clock signal.

There is also provided an ultra wideband (UWB) network receiver comprises a multi-band orthogonal frequency division multiplexing (MB-OFDM) modem which demodulates digital reception data of an MB-OFDM type; a direct sequence code division multiple access (DS-CDMA) modem which demodulates digital reception data of an DS-CDMA type; an automatic gain controller (AGC) which controls the amplitude of an input signal and outputs the signal as an analog reception signal; an analog-to-digital converter which converts the analog reception signal into the digital reception data; a phase locked loop (PLL) which locks a phase of a frequency used for MB-OFDM type or DS-CDMA; a mode switch which switches the digital reception data to the MB-OFDM modem or the DS-CDMA modem according to a mode control signal; and a central processing unit (CPU) which determines if data are processed according to the MB-OFDM type or the DS-CDMA type, transmits the mode control signal to the mode switch, and transmits a phase control signal to the PLL.

The mode control signal may be a high-speed mode control signal or a low-speed mode control signal.

The UWB receiver may further comprise an analog matched filter which integrates, samples, and holds an amplified signal; and an amplifier which amplifies the input signal and outputs an amplified signal to the analog matched filter and the AGC; wherein the PLL transmits a symbol rate clock to the analog matched filter to control the phase of the filtered signal.

The UWB network receiver may further comprise a band pass filter (BPF) which filters a reception signal, and passes a signal of a frequency band of the MB-OFDM type or a frequency band of the DS-CDMA type; a low noise amplifier (LNA) which amplifies the signal from the BPF and lowers a noise factor of the UWB network receiver; a voltage controlled oscillator (VCO) which generates an oscillation signal according to a control voltage from the PLL; a mixer which mixes the amplified signal and the oscillation signal; a low pass filter (LPF) which blocks a high frequency noise component of the mixed signal and passes a signal of a low frequency band to the AGC; and a multi-tone generator which generates the oscillation signal as a local oscillation signal of an I channel and a Q channel and transmits the oscillation signal to the mixer.

When there is no data received, the mode switch may be switched to the DS-CDMA modem so that the UWB network transmitter is in the low-speed operation mode.

There is also provided a method of switching transmission modes in an ultra wide band network transmitter, the method comprising: receiving a command to transmit data; and switching to a multi-band orthogonal frequency division multiplexing (MB-OFDM) modem to select a to the high-speed operation mode.

The method may further comprise transmitting the data in the high-speed operation mode.

After the data is transmitted, whether to remain in the high-speed operation mode may be determined, and when a low-speed operation mode is desired, switching to the direct sequence code division multiple access (DS-CDMA) modem to select the low-speed operation mode.

### BRIEF DESCRIPTION OF THE DRAWING FIGURES

The above and other aspects of the present invention will become more apparent by describing in detail exemplary embodiments thereof with reference to the attached drawing figures, wherein;

FIG. 1A is a schematic diagram showing the construction of a wireless frequency transceiver of a conventional MB-OFDM type;

FIG. 1B is a schematic diagram showing the construction of a wireless frequency transceiver of a conventional DS-CDMA type;

FIG. 2 is a schematic diagram showing the construction of a UWB network transmitter according to an exemplary embodiment of the present invention;

FIG. 3 is a schematic diagram showing the construction of a UWB network receiver according to an exemplary embodiment of the present invention;

FIG. 4 is a schematic diagram showing the construction of a UWB network receiver without an analog matched filter according to an exemplary embodiment of the present invention;

FIG. 5 is a schematic diagram showing the construction of a PLL according to an exemplary embodiment of the present invention; and

FIG. 6 is a flow chart showing the operation of a UWB network switching method according to an exemplary embodiment of the present invention.

### DETAILED DESCRIPTION OF EXEMPLARY EMBODIMENTS OF THE PRESENT INVENTION

Hereinafter, an exemplary embodiment of the present invention will be described in detail with reference to the accompanying drawing figures.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

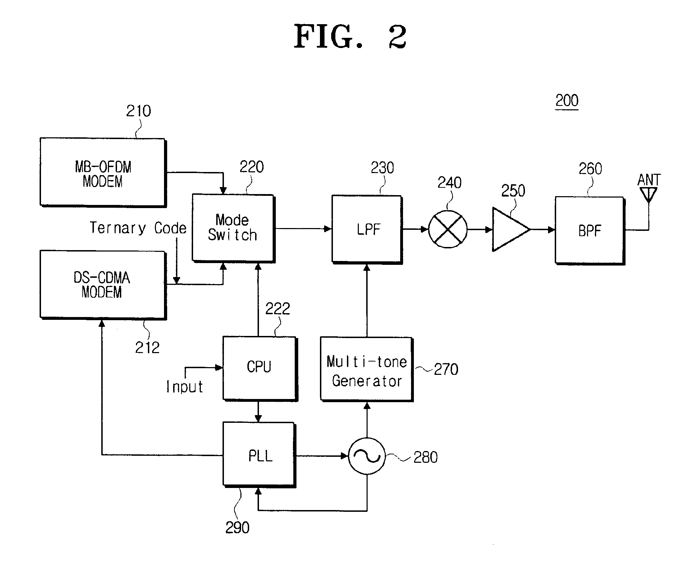

FIG. 2 is a schematic diagram showing the construction of a UWB network transmitter according to an exemplary embodiment of the present invention.

The UWB network transmitter 200 according to an exemplary embodiment of the present invention includes an MB-OFDM modem 210, a DS-CDMA modem 212, a mode switch 220, a central processing unit (CPU) 222,_a low-pass filter (LPF) 230, a mixer 240, an amplifier 250, a band-pass filter (BPF) 260, a multi-tone generator 270, a voltage controlled oscillator (VCO) 280 and a phase lock loop (PLL) 290.

The MB-OFDM modem 210 modulates a transmission signal of the MB-OFDM type and the DS-CDMA modem 212 modulates a transmission signal of the DS-CDMA type.

The mode switch 220 switches to the MB-OFDM modem 210 or the DS-CDMA modem 212 according to a mode control signal, which may be a high-speed mode control signal or a low-speed mode control signal, transmitted from the CPU 222.

The CPU 222 transmits the mode control signal, i.e. high-speed mode control signal or the low-speed mode control signal, to the mode switch 220 according to a mode selection input. The mode selection input may come from a user. Additionally, the CPU 222 transmits a phase control signal to the PLL 290 to control a phase of a frequency to be used in the corresponding operation mode according to the mode selection input.

The LPF 230 filters a high frequency noise component of a signal and passes a signal of a low frequency band.

The mixer 240 mixes the transmission signal and an oscillation signal, thus up-converting the transmission signal. The amplifier 250 amplifies the up-converted transmission signal. The up-converted transmission signal is a radio frequency (RF) signal.

The BPF 260 passes a frequency band corresponding to the MB-OFDM modulation type or a frequency band corresponding to the DS-CDMA modulation type and filters out other frequency components.

The multi-tone generator 270 generates the oscillation signal as a local oscillation signal of an I channel and a Q channel and the VCO 280 generates a voltage-controlled oscillation signal according to a control voltage.

The PLL 290 shifts a frequency phase according to a phase control signal transmitted from the CPU 222 and locks the frequency phase according to which modulation is selected, i.e. the MB-OFDM type or the DS-CDMA type modulation..

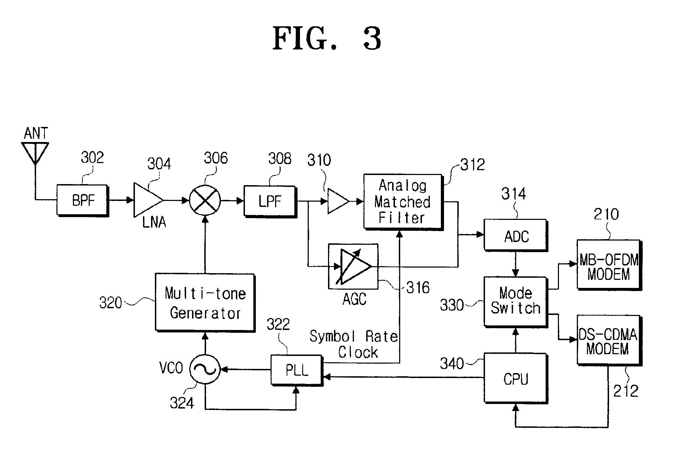

FIG. 3 is a schematic diagram showing the construction of a UWB network receiver according to an exemplary embodiment of the present invention.

The UWB network receiver 300 according to the present invention includes a band-pass filter (BPF) 302, a low noise amplifier (LNA) 304, a mixer 306, a low-pass filter (LPF) 308, an amplifier 310, an analog matched filter 312, an analog-to-digital converter (ADC) 314, an automatic gain controller (AGC) 316, a multi-tone generator 320, a phase lock loop (PLL) 322, a voltage controlled oscillator (VCO) 324, a mode switch 330, a central processing unit (CPU) 340, an MB-OFDM modem 210, an DS-CDMA modem 212.

The BPF 302 passes a signal of a frequency band corresponding to the MB-OFDM type modulation or a frequency band corresponding to the DS-CDMA type modulation and filters out other frequency components of the signal. The LNA 304 is a high frequency, low noise amplifier to lower a noise factor of the overall receiver.

The mixer 306 mixes a reception signal output from the LNA and an oscillation signal. The LPF 308 filters a high frequency noise component of the signal output from the mixer and passes a signal of a low frequency band.

The amplifier 310 amplifies the filtered reception signal. The analog matched filter 312 integrates, samples and holds the reception signal.

The AGC 316 automatically controls the amplitude of the reception signal to keep the amplitude regular. The ADC 314 converts the gain-controlled analog reception signal into digital reception data.

The VCO 324 generates a voltage-controlled oscillation signal according to a control voltage. The multi-tone generator 320 receives the voltage-controlled oscillation signal and generates the oscillation signal as a local oscillation signal of I channel and Q channel, and transmits the signal to the mixer 306.

The PLL 322 locks the frequency phase according to whether the MB-OFDM type or the DS-CDMA type modulation is used and transmits a symbol rate clock to the analog matched filter 312 to control the phase of the reception signal.

The mode switch 330 switches to the MB-OFDM modem 210 or the DS-CDMA modem 212 according to a mode control signal, which may be a high-speed mode control signal or a low-speed mode control signal, transmitted from the CPU 340. It is common for the mode switch 330 to switch to the DS-CDMA modem 212.

The CPU 340 determines if reception data is processed using the MB-OFDM type or the DS-CDMA type modulation and transmits a mode control signal, i.e. a high-speed mode control signal or a low-speed mode control signal, to the mode switch 330. Additionally, the CPU 222 transmits a phase control signal to the PLL 322 to control a phase of a frequency to be used in the corresponding operation mode according to the mode control signal.

The MB-OFDM modem 210 modulates the reception signal using the MB-OFDM type modulation and the DS-CDMA modem 212 modulates the reception signal using the DS-CDMA type modulation.

The receiver of FIG. 3 uses the conventional analog reception construction which uses both the AGC 316 and the analog matched filter 312 so that the ADC 314 operates at a low-speed. As a result, the power consumption of the ADC 314 decreases.

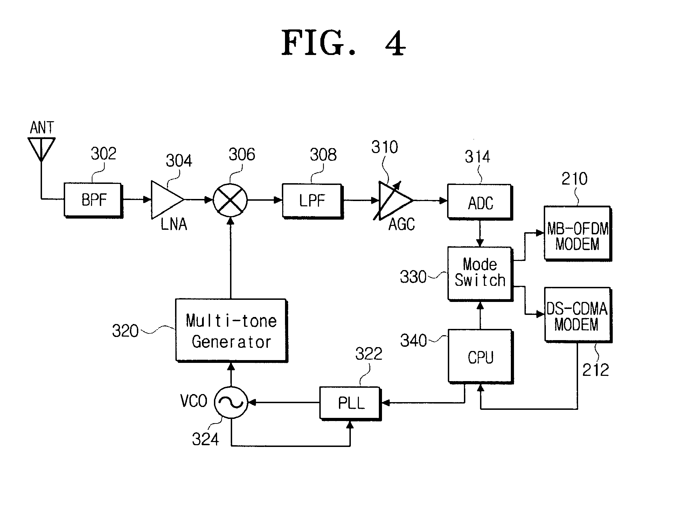

FIG. 4 is a schematic diagram showing the construction of a UWB network receiver without an analog matched filter according to an exemplary embodiment of the present invention.

The receiver of FIG. 4 excludes the analog matched filter 312 and uses the AGC 316 instead of the amplifier 310.

Accordingly, the reception signal passes through the LPF 308, is amplified in the AGC 316 and is transmitted directly to the ADC 314.

Therefore, the ADC 314 operates at a high-speed to immediately covert the analog reception signal into digital reception data. That is, a high-speed A/D converter is used and functions as a digital matched filter.

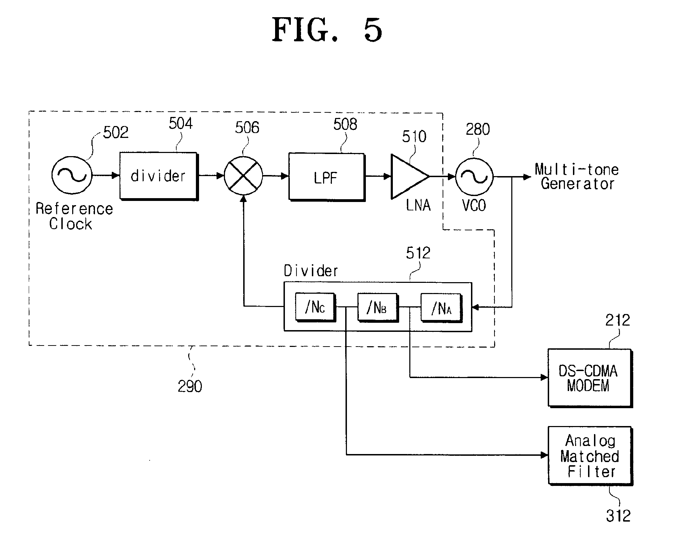

FIG. 5 is a schematic diagram showing the construction of a PLL according to an exemplary embodiment of the present invention.

The PLL 290 according to an exemplary embodiment of the present invention includes a reference clock generator 502, a divider 504, a mixer 506, a low pass filter (LPF) 508, a low noise amplifier (LNA) 510 and a demultiplier 512.

The reference clock generator 502 generates a reference frequency and the divider 504 divides the reference frequency to generate a division frequency f1. The mixer 506 mixes the division frequency f1 and a demultiply frequency to detect phase.

Additionally, the LPF 508 filters out a high frequency noise component of the mixed frequency signal and passes a frequency signal of the low frequency band, and the LNA 510 lowers a noise factor of the frequency signal and transmits the frequency signal to a VCO 280.

The demultiplier 512 demultiplies the frequency signal fed back from the VCO 280 and generates a chip rate clock signal and a symbol rate clock signal. That is, the demultiplier 512 generates a chip rate clock signal of about 500 MHz on the first demultiplying (/N_{A)} to transmit to the DS-CDMA modem 212, generates a symbol rate clock signal on the order of about several hundreds of kilohertz to several MHz on the second demultiplying (/N_{B)} to transmit to the analog matched filter 312 and transmits the demultiplied frequency to the mixer 506 on the third demultiplying (/N_{C)}.

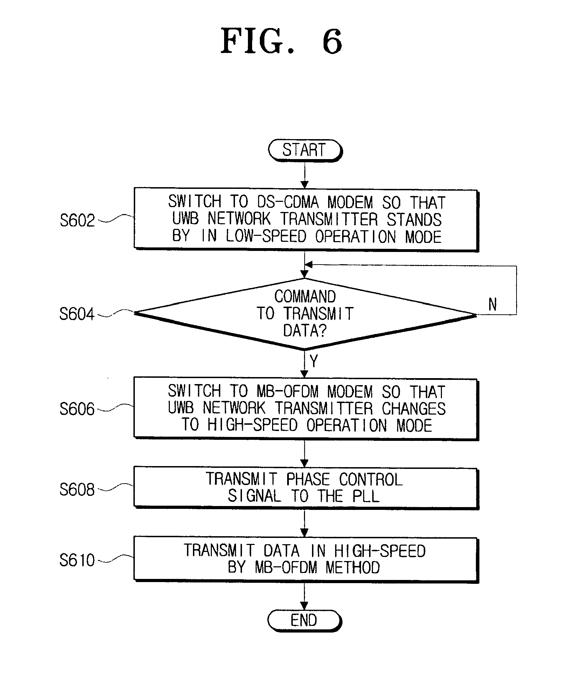

Referring to FIG. 6, the operation of a UWB network switching method according to an exemplary embodiment of the present invention will be described.

First, usually when data is not transmitted, the mode switch 220 selects the DS-CDMA modem 212 so that the UWB network transmitter 200 stands by in the low-speed operation mode (S602). The selection may occur by the mode switch connecting to the DS-CDMA modem 212.

Subsequently, if a command is received to transmit mass data (S604), the CPU 222 transmits a high-speed mode control signal to the mode switch 220. Accordingly, the mode switch 220 switches to the MB-OFDM modem 210 so that the UWB network transmitter 200 changes to the high-speed operation mode (S606). The command may be input by a user's key input.

In addition, the CPU 222 transmits a phase control signal to the PLL 290 to select the frequency phase of the MB-OFDM type (S608). Accordingly, the PLL 290 shifts the frequency phase to the frequency phase of the MB-OFDM type according to the phase control signal to control the frequency phase.

Further, the mass data passes through MB-OFDM modem 210, the LPF 230, the mixer 240, the amplifier 250 and the BPF 260, as described above, and is transmitted through the ANT under the control of the CPU 222 (S610).

The CPU 222 determines whether to keep the high-speed operation mode after transmitting the mass data. When it is determined to use the low-speed operation mode, the CPU 222 transmits a low-speed mode control signal to the mode switch 220. Accordingly, the mode switch 220 selects the DS-CDMA modem 212 so that the UWB network transmitter 200 changes to the low-speed operation mode. The mode switch may select the DS-CDMA modem by switching and connecting to the DS-CDMA modem.

As can be appreciated from the above description of the UWB network system according to exemplary embodiments of the present invention, as the DS-CDMA type communication and the MB-OFDM type communication are shared in one device, system resources can be saved compared with using two different devices for each type of communication.

Further, when the system operates in one of the high-speed and the low-speed modes, the other mode is not used so that power can be saved.

Further, when the MB-OFDM type, which is incompatible with other sensor network systems, is used, an extra transceiver is not needed for the sensor network systems to subscribe.

Further, when the DS-CDMA type is used, low compatibility in the high-speed mode can be resolved.

Further, when the MB-OFDM transceiver and the DS-CDMA transceiver are used at the same time according to an exemplary embodiment of the present invention, the problem of the frequencies of each other's transceivers operating as noise and interference is resolved.

## Claims

1. An ultra wideband (UWB) network transmitter comprising:
a multi-band orthogonal frequency division multiplexing (MB-OFDM) modem which modulates (210) a transmission signal using MB-OFDM;
a direct sequence code division multiple access (DS-CDMA) modem (212) which modulates a transmission signal using DS-CDMA;
a mode switch (220) which switches to the MB-OFDM modem or the DS-CDMA modem according to a mode control signal;
a phase lock loop (PLL) (290) which shifts a phase of a frequency according to a phase control signal and locks the frequency used for MB-OFDM type modulation or the DS-CDMA type modulation; and
a central processing unit (CPU) (222) which transmits the mode control signal to the mode switch and transmits the phase control signal to the PLL.

2. The UWB network transmitter of claim 1, wherein the mode control signal is a high-speed mode control signal or a low-speed mode control signal.

3. The UWB network transmitter of claim 1, wherein the CPU transmits the mode control signal to the mode switch and the phase control signal to the PLL, according to a mode selection input.

4. The UWB network transmitter of claim 1, further comprising:
a low-pass filter (LPF) (230) which filters out a high frequency noise component of a signal output from the MS-OFDM modem or the DS-CDMA modem and passes a low frequency component of the signal;
a mixer (240) which mixes the signal output from the LPF and an oscillation signal to up-convert the signal;
an amplifier (250) which amplifies the up-converted signal;
a band-pass filter (BPF) (260) which passes a frequency band of an MB-OFDM type or a frequency band of an DS-CDMA type;
a voltage control oscillator (VCO) (280) which generates a voltage-controlled oscillation signal according to a control voltage; and
a multi-tone generator (270) which receives the voltage-controlled oscillator signal and generates the oscillation signal as a local oscillation signal for an I channel and a Q channel.

5. The UWB network transmitter of claim 1, wherein when there is no data to be transmitted, the mode switch is switched to the DS-CDMA modem so that the UWB network transmitter is in a low-speed operation mode.

6. The UWB network transmitter of claim 1, wherein the CPU determines whether to keep a high-speed operation mode after transmitting data, and when it is determined that a low-speed operation mode is desired, , the CPU transmits the low-speed mode control signal to the mode switch.

7. The UWB network transmitter of claim 1, wherein the PLL comprises:
a reference clock generator (502) which generates a reference frequency;
a divider (504) which divides the reference frequency to generate a division frequency;
a mixer (506) which mixes the division frequency and a demultiply frequency to detect phase;
a LPF (508) which blocks a high frequency noise component of a signal output from the mixer and passes a low frequency component of the signal; and
a low noise amplifier (LNA) (510) which amplifies the signal output from the LPF and lowers a noise factor of the signal and transmits the signal to the VCO; and
a divider (512) which divides the signal output from the VCO and generates a chip rate clock signal and a symbol rate clock signal.

8. An ultra wideband (UWB) network receiver comprising:
a multi-band orthogonal frequency division multiplexing (MB-OFDM) modem (210) which demodulates digital reception data of an MB-OFDM type;
a direct sequence code division multiple access (DS-CDMA) modem (212) which demodulates digital reception data of an DS-CDMA type;
an automatic gain controller (AGC) (316) which controls the amplitude of an input signal and outputs the signal as an analog reception signal;
an analog-to-digital converter (314) which converts the analog reception signal into the digital reception data;
a phase locked loop (PLL) (322) which locks a phase of a frequency used for MB-OFDM or DS-CDMA;
a mode switch (330) which switches the digital reception data to the MB-OFDM modem or the DS-CDMA modem according to a mode control signal; and
a central processing unit (CPU) (340) which determines if data are processed according to the MB-OFDM type or the DS-CDMA type, transmits the mode control signal to the mode switch, and transmits a phase control signal to the PLL.

9. The UWB network receiver of claim 8, wherein the mode control signal is a high-speed mode control signal or a low-speed mode control signal.

10. The UWB network receiver of claim 8, further comprising:
an analog matched filter (312) which integrates, samples, and holds an amplified signal; and
an amplifier (310) which amplifies the input signal and outputs an amplified signal to the analog matched filter and the AGC;
wherein the PLL transmits a symbol rate clock to the analog matched filter to control the phase of the filtered signal.

11. The UWB network receiver of claim 8, further comprising:
a band pass filter (BPF) (302) which filters a reception signal, and passes a signal of a frequency band of the MB-OFDM type or of the DS-CDMA type;
a low noise amplifier (LNA) (304) which amplifies the signal from the BPF and lowers a noise factor of the UWB network receiver;
a VCO (324) which generates an oscillation signal according to a control voltage from the PLL;
a mixer (306) which mixes the amplified signal from the LNA and the oscillation signal;
a low pass filter (LPF) (308) which blocks a high frequency noise component of the mixed signal and passes a signal of a low frequency band to the AGC; and
a multi-tone generator (320) which generates the oscillation signal as a local oscillation signal of an I channel and a Q channel and transmits the oscillation signal to the mixer.

12. The UWB network receiver of claim 10, further comprising:
a band pass filter (BPF) (302) which filters a reception signal, and passes a signal of a frequency band of the MB-OFDM type or of the DS-CDMA type;
a low noise amplifier (LNA) (304) which amplifies the signal from the BPF and lowers a noise factor of the UWB network receiver;
a VCO (324) which generates an oscillation signal according to a control voltage from the PLL;
a mixer which mixes the amplified signal from the LNA and the oscillation signal;
a low pass filter (LPF) (308) which blocks a high frequency noise component of the mixed signal and passes a signal of a low frequency band to the AGC; and
a multi-tone generator (320) which generates the oscillation signal as a local oscillation signal of an I channel and a Q channel and transmits the oscillation signal to the mixer.

13. The UWB network receiver of claim 8, wherein when there is no data received, the mode switch is switched to the DS-CDMA modem so that the UWB network transmitter is in the low-speed operation mode.

14. A method of switching transmission modes in an ultra wide band network transmitter, the method comprising:
receiving a command to transmit data;
switching to a multi-band orthogonal frequency division multiplexing (MB-OFDM) modem to select a high-speed operation mode; and
after the data is transmitted, determining whether to remain in the high-speed operation mode, and when a low-speed operation mode is desired, switching to direct sequence code division multiple access (DS-CDMA) modem to select a low-speed operation mode.

15. The method of claim 14, further comprising the step of:
transmitting the data in the high-speed operation mode.

## Patentansprüche

1. Ultrabreitband-Netzwerk-Sendevorrichtung, die umfasst:
ein Multiband-OFDM-Modem (210), das ein Sendesignal unter Verwendung von Multi-band-OFDM moduliert ;
ein DS-CDMA-Modem (direct sequence code division mulitple acces modem) (212), das ein Sendesignal unter Verwendung von DS-CDMA moduliert;
eine Modus-Umschalteinrichtung (220), die entsprechend einem Modussteuersignal auf das Multiband-OFDM-Modem oder das DS-CDMA-Modem umschaltet;
einen Phasenregelkreis (290), der eine Phase einer Frequenz entsprechend einem Phasenregelsignal verschiebt und die Frequenz verriegelt, die für Multiband-OFDM-Modulation oder DS-CDMA-Modulation verwendet wird; und
eine zentrale Verarbeitungseinheit (222), die das Modussteuersignal zu der Modus-Umschalteinrichtung sendet und das Phasenregelsignal zu dem Phasenregelkreis sendet.

2. Ultrabreftband-Netzwerk-Sendevorrichtung nach Anspruch 1, wobei das Modussteuersignal ein Hochgeschwindigkeits-Modussteuersignal oder ein Niedriggeschwindigkeits-Modussteuersignal ist.

3. Ultrabreitband-Netzwerk-Sendevorrichtung nach Anspruch 1, wobei die zentrale Verarbeitungsheinheit entsprechend einer Modus-Auswahleingabe das Modussteuersignal zu der Modus-Umschalteinrichtung und das Phasenregelsignal zu dem Phasenregelkreis sendet.

4. Ultrabreitband-Netzwerk-Sendevorrichtung nach Anspruch 1, die des Weiteren umfasst:
ein Tiefpassfilter (230), das eine Hochfrequenz-Rauschkomponente eines Signals ausfiltert, das von dem Multiband-OFDM-Modem oder dem DS-CDMA-Modem ausgegeben wird, und eine Niederfrequenzkomponente des Signals durchlässt;
eine Mischeinrichtung (240), die das von dem Tiefpassfilter ausgegebene Signal und
ein Oszillationssignal mischt, um Aufwärtsmischen des Signals durchzuführen;
einen Verstärker (250), der das Aufwärtsmischen unterzogene Signal verstärkt;
ein Bandpassfilter (260), das ein Frequenzband eines Multiband-OFDM-Typs oder ein Frequenzband eines DS-CDMA-Typs durchlässt;
einen Spannungssteuer-Oszillator (VCO) (280), der entsprechend einer Steuerspannung ein spannungsgesteuertes Oszillationssignal erzeugt;
einen Multiton-Generator (270), der das spannungsgesteuerte Oszillationssignal empfängt und das Oszillationssignal als ein lokales Oszillationssignal für einen I-Kanal und
einen Q-Kanal erzeugt.

5. Ultrabreitband-Netzwerk-Sendevorrichtung nach Anspruch 1, wobei, wenn keine Daten zu senden sind, die Modus-Umschalteinrichtung auf das DS-CDMA-Modem umgeschaltet wird, so dass sich die Ultrabreitband-Netzwerk-Sendevorrichtung in einem Niedriggeschwindigkeits-Betriebsmodus befindet.

6. Ultrabreitband-Netzwerk-Sendevorrichtung nach Anspruch 1, wobei die zentrale Verarbeitungsheinheit feststellt, ob nach dem Senden von Daten ein Hochgeschwindigkeits-Betriebsmodus beibehalten wird, und, wenn festgestellt wird, dass ein Niedriggeschwindigkeits-Betriebsmodus verlangt wird, die zentrale Verarbeitungseinheit das Niedriggeschwindigkeitsmodus-Steuersignal zu der Modus-Umschalteinrichtung sendet.

7. Ultrabreitband-Netzwerk-Sendevorrichtung nach Anspruch 1, wobei der Phasenregelkreis umfasst:
ein Bezugstaktgenerator (502), der eine Bezugsfrequenz erzeugt;
einen Teiler (504), der die Bezugsfrequenz teilt, um eine Teilfrequenz zu erzeugen;
eine Mischeinrichtung (506), die die Teilfrequenz und eine Demultiplizierfrequenz mischt, um Phase zu erfassen;
ein Tiefpassfilter (508), das eine Hochfrequenz-Rauschkomponente eines von der Mischeinrichtung ausgegebenen Signals sperrt und eine Tieffrequenzkomponente des Signals durchlässt; und
einen rauscharmen Verstärker (510), der das von dem Tiefpassfilter ausgegebene Signal verstärkt und einen Rauschfaktor des Signals absenkt und das Signal zu dem Spannungssteuer-Oszillator sendet; und
einen Teiler (512), der das von dem Spannungssteuer-Oszillator ausgegebene Signal teilt und ein Chipraten-Taktsignal sowie ein Symbolraten-Taktsignal erzeugt.

8. Ultrabreitband-Netzwerk-Empfangsvorrichtung, die umfasst:
ein Multiband-OFDM-Modem (210), das digitale Empfangsdaten eines Multiband-OFDM-Typs demoduliert;
ein DS-CDMA-Modem (direct sequence code division mulitple acces modem) (212), das digitale Empfangsdaten eines DS-CDMA-Typs demoduliert;
eine automatische Verstärkungsregelungseinrichtung (316), die die Amplitude eines Eingangssignals regelt und das Signal als ein analoges Empfangssignal ausgibt;
eine A/D-Wandeleinrichtung (314), die das analoge Empfangssignal in die digitalen Empfangsdaten umwandelt;
einen Phasenregelkreis (322), der eine Phase einer Frequenz verriegelt, die für Multi-band-OFDM oder DS-CDMA verwendet wird;
eine Modus-Umschalteinrichtung (330), die die digitalen Empfangsdaten entsprechend einem Modus-Steuersignal zu dem Multiband-OFDM-Modem oder dem DS-CDMA-Modem schaltet; und
eine zentrale Verarbeitungseinheit (340), die feststellt, ob Daten entsprechend dem Multiband-OFDM-Typ oder dem DS-CDMA-Typ verarbeitet werden, das Modus-Steuersignal zu der Modus-Umschalteinrichtung sendet und ein Phasenregelsignal zu dem Phasenregelkreis sendet.

9. Ultrabreitband-Netzwerk-Empfangsvorrichtung nach Anspruch 8, wobei das Modus-Steuersignal ein Hochgeschwindigkeits-Modus-Steuersignal oder ein Niedriggeschwindigkeits-Modus-Steuersignal ist.

10. Ultrabreitband-Netzwerk-Empfangsvorrichtung nach Anspruch 8, die des Weiteren umfasst:
ein analoges abgestimmtes Filter (312), das ein verstärktes Signal integriert, abtastet und hält; und
einen Verstärker (310), der das Eingangssignal verstärkt und ein verstärktes Signal an das analoge abgestimmte Filter und die automatische Verstärkungsregelungseinrichtung ausgibt;
wobei der Phasenregelkreis einen Symbolraten-Takt zu dem analogen abgestimmten Filter sendet, um die Phase des gefilterten Signals zu regeln.

11. Ultrabreitband-Netzwerk-Empfangsvorrichtung nach Anspruch 8, die des Weiteren umfasst:
ein Bandpassfilter (302), das ein Empfangssignal filtert und ein Signal eines Frequenzbandes des Multiband-OFDM-Typs oder des DS-CDMA-Typs durchlässt;
einen rauscharmen Verstärker (304), der das Signal von dem Bandpassfilter verstärkt und einen Rauschfaktor der Ultrabreitband-Netzwerk-Empfangsvorrichtung absenkt;
einen Spannungssteuer-Oszillator (324), der ein Oszillationssignal entsprechen einer Regelspannung von dem Phasenregelkreis erzeugt;
eine Mischeinrichtung (306), die das verstärkte Signal von dem rauscharmen Verstärker und das Oszillationssignal mischt;
ein Tiefpassfilter (308), das eine Hochfrequenz-Rauschkomponente des gemischten Signals blockiert und ein Signal eines Niederfrequenzbandes zu der automatischen Verstärkungsregelungseinrichtung durchlässt; und
einen Multiton-Generator (320), der das Oszillationssignal als ein lokales Oszillationssignal eines I-Kanals und eines Q-Kanals erzeugt und das Oszillationssignal zu der Mischeinrichtung sendet.

12. Ultrabreitband-Netzwerk-Empfangsvorrichtung nach Anspruch 10, die des Weiteren umfasst:
ein Bandpassfilter (302), das ein Empfangssignal filtert und ein Signal eines Frequenzbandes des Multiband-OFDM-Typs oder des DS-CDMA-Typs durchlässt;
einen rauscharmen Verstärker (304), der das Signal von dem Bandpassfilter verstärkt und einen Rauschfaktor der Ultrabreitband-Netzwerk-Empfangsvorrichtung absenkt; einen Spannungssteuer-Oszillator (324), der ein Oszillationssignal entsprechend einer Regelspannung von dem Phasenregelkreis erzeugt;
eine Mischeinrichtung, die das verstärkte Signal von dem rauscharmen Verstärker und
das Oszillationssignal mischt;
ein Tiefpassfilter (308), das eine Hochfrequenz-Rauschkomponente des gemischten Signals blockiert und ein Signal eines Niederfrequenzbandes zu der automatischen Verstärkungsregelungseinrichtung durchlässt; und
einen Multiton-Generator (320), der das Oszillationssignal als ein lokales Oszillationssignal eines I-Kanals und eines Q-Kanals erzeugt und das Oszillationssignal zu der Mischeinrichtung sendet.

13. Ultrabreitband-Netzwerk-Empfangsvorrichtung nach Anspruch 8, wobei, wenn keine Daten empfangen werden, die Modus-Umschalteinrichtung zu dem DS-CDMA-Modem umgeschaltet wird, so dass sich die Ultrabreitband-Netzwerk-Sendevorrichtung in dem Niedriggeschwindigkeits-Betriebsmodus befindet.

14. Verfahren zum Schalten von Sendemodi in einer Ultrabreitband-Netzwerk-Sendevorrichtung, wobei das Verfahren umfasst:
Empfangen eines Befehls zum Senden von Daten;
Umschalten auf ein Multiband-OFDM-Modem, um einen Hochgeschwindigkeits-Betriebsmodus auszuwählen; und
nachdem die Daten gesendet sind, Feststellen, ob in dem Hochgeschwindigkeits-Modus verblieben wird, und, wenn ein Niedriggeschwindigkeits-Betriebsmodus verlangt wird, Umschalten zu dem DS-CDMA-Modem (direct sequence code division mulitple acces modem), um einen Niedriggeschwindigkeits-Betriebsmodus auszuwählen.

15. Verfahren nach Anspruch 14, das des Weiteren die folgenden Schritte umfasst:
Senden der Daten in dem Hochgeschwindigkeits-Betriebsmodus.

## Revendications

1. Emetteur de réseau bande ultralarge (UWB) comprenant :
un modem multibande et à multiplexage par répartition orthogonale de la fréquence (MB-OFDM) (210) qui module un signal de transmission en utilisant MB-OFDM ;
un modem à séquence directe et à accès multiple par répartition en code (DS-CDMA) (212) qui module un signal de transmission en utilisant DS-CDMA ;
un commutateur de mode (220) qui commute vers le modem MB-OFDM ou le modem DS-CDMA selon un signal de commande de mode ;
une boucle à verrouillage de phase (PLL) (290) qui déplace une phase d'une fréquence selon un signal de commande de phase et verrouille la fréquence utilisée pour la modulation du type MB-OFDM ou la modulation du type DS-CDMA ; et
une unité centrale de traitement (CPU) (222) qui transmet le signal de commande de mode au commutateur de mode et transmet le signal de commande de phase à la PLL.

2. Emetteur de réseau UWB selon la revendication 1, dans lequel le signal de commande de mode est un signal de commande de mode haute vitesse ou un signal de commande de mode basse vitesse.

3. Emetteur de réseau UWB selon la revendication 1, dans lequel la CPU transmet le signal de commande de mode au commutateur de mode et le signal de commande de phase à la PLL, selon une entrée de sélection de mode.

4. Emetteur de réseau UWB selon la revendication 1, comprenant en outre :
un filtre passe-bas (LPF) (230) qui élimine par filtrage une composante de bruit haute fréquence d'un signal sorti du modem MS-OFDM ou du modem DS-CDMA et passe une composante basse fréquence du signal ;
un mélangeur (240) qui mélange le signal sorti du LPF et un signal d'oscillation pour convertir par élévation le signal ;
un amplificateur (250) qui amplifie le signal converti par élévation ;
un filtre passe-bande (BPF) (260) qui passe une bande de fréquences d'un type MB-OFDM ou une bande de fréquences d'un type DS-CDMA ;
un oscillateur commandé en tension (VCO) (280) qui génère un signal d'oscillation commandé en tension selon une tension de commande ; et
un générateur multitonalité (270) qui reçoit le signal de l'oscillateur commandé en tension et génère le signal d'oscillation comme un signal d'oscillation local pour une voie I et une voie Q.

5. Emetteur de réseau UWB selon la revendication 1, dans lequel lorsqu'il n'y a pas de données à transmettre, le commutateur de mode est commuté vers le modem DS-CDMA de sorte que l'émetteur de réseau UWB soit dans un mode de fonctionnement basse vitesse.

6. Emetteur de réseau UWB selon la revendication 1, dans lequel la CPU détermine si garder un mode de fonctionnement haute vitesse après la transmission des données, et lorsqu'il est déterminé qu'un mode de fonctionnement basse vitesse est souhaité, la CPU transmet le signal de commande de mode basse vitesse au commutateur de mode.

7. Emetteur de réseau UWB selon la revendication 1, dans lequel la PLL comprend :
un générateur d'horloge de référence (502) qui génère une fréquence de référence ;
un diviseur (504) qui divise la fréquence de référence pour générer une fréquence de division ;
un mélangeur (506) qui mélange la fréquence de division et une fréquence de démultiplication pour détecter la phase ;
un LPF (508) qui bloque une composante de bruit haute fréquence d'un signal sorti du mélangeur et passe une composante basse fréquence du signal ; et
un amplificateur à faible bruit (LNA) (510) qui amplifie le signal sorti du LPF et abaisse un facteur de bruit du signal et transmet le signal au VCO ; et
un diviseur (512) qui divise le signal sorti du VCO et génère un signal d'horloge de débit des éléments et un signal d'horloge de débit des symboles.

8. Récepteur de réseau bande ultralarge (UWB) comprenant :
un modem multibande et à multiplexage par répartition orthogonale de la fréquence (MB-OFDM) (210) qui démodule des données de réception numériques d'un type MB-OFDM ;
un modem à séquence directe et à accès multiple par répartition en code (DS-CDMA) (212) qui démodule des données de réception numériques d'un type DS-CDMA ;
un contrôleur de gain automatique (AGC) (316) qui commande l'amplitude d'un signal d'entrée et sort le signal comme un signal de réception analogique ;
un convertisseur analogique-numérique (314) qui convertit le signal de réception analogique en données de réception numériques ;
une boucle à verrouillage de phase (PLL) (322) qui verrouille une phase d'une fréquence utilisée pour MB-OFDM ou DS-CDMA ;
un commutateur de mode (330) qui commute les données de réception numériques vers le modem MB-OFDM ou le modem DS-CDMA selon un signal de commande de mode ; et
une unité centrale de traitement (CPU) (340) qui détermine si des données sont traitées selon le type MB-OFDM ou le type DS-CDMA, transmet le signal de commande de mode au commutateur de mode, et transmet un signal de commande de phase à la PLL.

9. Récepteur de réseau UWB selon la revendication 8, dans lequel le signal de commande de mode est un signal de commande de mode haute vitesse ou un signal de commande de mode basse vitesse.

10. Récepteur de réseau UWB selon la revendication 8, comprenant en outre :
un filtre adapté analogique (312) qui intègre, échantillonne, et maintient un signal amplifié ; et
un amplificateur (310) qui amplifie le signal d'entrée et sort un signal amplifié vers le filtre adapté analogique et l'AGC ;
dans lequel la PLL transmet une horloge de débit des symboles au filtre adapté analogique pour commander la phase du signal filtré.

11. Récepteur de réseau UWB selon la revendication 8, comprenant en outre :
un filtre passe-bande (BPF) (302) qui filtre un signal de réception, et passe un signal d'une bande de fréquences du type MB-OFDM ou du type DS-CDMA ;
un amplificateur à faible bruit (LNA) (304) qui amplifie le signal en provenance du BPF et abaisse un facteur de bruit du récepteur de réseau UWB ;
un VCO (324) qui génère un signal d'oscillation selon une tension de commande en provenance de la PLL ;
un mélangeur (306) qui mélange le signal amplifié en provenance du LNA et le signal d'oscillation ;
un filtre passe-bas (LPF) (308) qui bloque une composante de bruit haute fréquence du signal mélangé et passe un signal d'une bande de fréquences basses vers l'AGC ; et
un générateur multitonalité (320) qui génère le signal d'oscillation comme un signal d'oscillation local d'une voie I et d'une voie Q et transmet le signal d'oscillation au mélangeur.

12. Récepteur de réseau UWB selon la revendication 10, comprenant en outre :
un filtre passe-bande (BPF) (302) qui filtre un signal de réception, et passe un signal d'une bande de fréquences du type MB-OFDM ou du type DS-CDMA ;
un amplificateur à faible bruit (LNA) (304) qui amplifie le signal en provenance du BPF et abaisse un facteur de bruit du récepteur de réseau UWB ;
un VCO (324) qui génère un signal d'oscillation selon une tension de commande en provenance de la PLL ;
un mélangeur qui mélange le signal amplifié en provenance du LNA et le signal d'oscillation ;
un filtre passe-bas (LPF) (308) qui bloque une composante de bruit haute fréquence du signal mélangé et passe un signal d'une bande de fréquences basses vers l'AGC ; et
un générateur multitonalité (320) qui génère le signal d'oscillation comme un signal d'oscillation local d'une voie I et d'une voie Q et transmet le signal d'oscillation au mélangeur.

13. Récepteur de réseau UWB selon la revendication 8, dans lequel lorsqu'il n'y a pas de données reçues, le commutateur de mode est commuté vers le modem DS-CDMA de sorte que l'émetteur de réseau UWB soit en mode de fonctionnement basse vitesse.

14. Procédé de commutation de modes de transmission dans un émetteur de réseau bande ultralarge, le procédé comprenant :
la réception d'une commande pour transmettre des données ;
la commutation vers un modem multibande et à multiplexage par répartition orthogonale de la fréquence (MB-OFDM) pour sélectionner un mode de fonctionnement haute vitesse ; et
après que les données sont transmises, déterminer si rester en mode de fonctionnement haute vitesse, et lorsqu'un mode de fonctionnement basse vitesse est souhaité, commuter vers le modem à séquence directe et à accès multiple par répartition en code (DS-CDMA) pour sélectionner un mode de fonctionnement basse vitesse.

15. Procédé selon la revendication 14, comprenant en outre l'étape consistant à :
transmettre les données dans le mode de fonctionnement haute vitesse.
